# EUROPÄISCHE PATENTSCHRIFT

(11) **EP 3 499 137 B1**
(45) Veröffentlichungstag und Bekanntmachung des Hinweises auf die Patenterteilung: **02.06.2021**
(21) Anmeldenummer: 18210904.1
(22) Anmeldetag: 07.12.2018
(51) Int. Cl.: F24D 19/00, F24D 19/10, F16K 29/00

(54) **VERFAHREN ZUM ANSTEUERN EINES THERMOSTATREGELVENTILS**
METHOD FOR CONTROLLING A THERMOSTATIC CONTROL VALVE
PROCÉDÉ DE COMMANDE D'UNE SOUPAPE DE COMMANDE DE THERMOSTAT

(30) Priorität: 12.12.2017 DE 102017222500
(43) Veröffentlichungstag der Anmeldung: 19.06.2019
(73) Patentinhaber: Robert Bosch GmbH, 70442 Stuttgart (DE)
(72) Erfinder: Krotzky, Soeren, 73728 Esslingen (DE)

(56) Entgegenhaltungen:
- WO-A2-2008/028110
- DE-A1-102012 101 625
- DE-A1-102015 111 640
- DE-A1-102015 205 638

## Beschreibung

Die Erfindung betrifft ein Verfahren zum Ansteuern eines Thermostatregelventils. Die Erfindung betrifft auch ein Computerprogramm, das zum Ausführen einer Ausführungsform des Verfahrens gemäß der vorliegenden Erfindung eingerichtet ist, ein maschinenlesbares Speichermedium mit einem Computerprogramm gemäß der vorliegenden Erfindung, ein Thermostatregelventil zum Ausführen des Verfahrens gemäß der vorliegenden Erfindung sowie ein Heizsystem und/oder ein Systems zur Hausautomation zum Ausführen des Verfahrens gemäß der vorliegenden Erfindung.

### Stand der Technik

Es sind elektronische Thermostatregelventile bekannt, die immer einmal die Woche, eine Ventilfahrt eines Stößels des Thermostatregelventils zum Verkalkungsschutz durchführen. Ein Verfahren gemäß dem Oberbegriff des Anspruchs 1 ist aus der Patentschrift DE102015111640 bekannt.

### Offenbarung der Erfindung

### Vorteile

Die vorliegende Erfindung beschreibt ein Verfahren zum Ansteuern eines Thermostatregelventils, bei dem eine Ventilfahrt eines Stößels zum Verkalkungsschutz durchgeführt wird. Die Ventilfahrt wird in Abhängigkeit von einem zeitlichen Öffnungszustandsverlaufs des Stößels durchgeführt. Das hat den Vorteil, dass die Ventilfahrt nur dann durchgeführt wird, wenn diese notwendig ist. Beschreibt der zeitliche Öffnungszustandsverlauf beispielsweise bereits eine ausreichende Bewegung des Stößels in der näheren Vergangenheit, könnte eine Ventilfahrt nicht mehr notwendig sein. Überflüssige Ventilfahrten werden vermieden. Auf diese Weise wird eine Mechanik des Thermostatregelventils weniger stark belastet, was den Verschleiß des Thermostatregelventils verringert und die Produktlebensdauer erhöht. Zusätzlich wird bei batteriebetriebenen Thermostatregelventilen eine Batterielebensdauer erhöht.

Der Öffnungszustandsverlauf kann zu vorgegebenen Zeitpunkten oder kontinuierlich bzw. weitgehend kontinuierlich überprüft werden.

Unter einem "Thermostatregelventil" soll insbesondere ein Temperaturregler verstanden werden, der in Abhängigkeit von einer Umgebungstemperatur mit einem Ventil einen Durchfluss einer Heizflüssigkeit so steuert, dass die Umgebungstemperatur einen vorgegebenen Sollwert annimmt. Insbesondere soll ein Thermostatregelventil die Umgebungstemperatur weitgehend konstant halten. Unter einem Thermostatregelventil soll auch ein Heizungsthermostatventil verstanden werden. Ein Heizungsthermostatventil ist ein Thermostatregelventil für die Regelung eines Heizwasserdurchflusses in einen Heizkörper. Vorteilhaft ist ein Heizungsthermostatventil am Heizkörper angeordnet.

Ein Thermostatregelventil umfasst üblicherweise einen Ventilkörper sowie einen Thermostatkopf. Der Ventilkörper weist ein Ventil und einen Stößel zum Einstellen des Durchflusses der Heizflüssigkeit auf. Der Stößel - manchmal auch als Übertragungsstift bezeichnet - ist axial beweglich und drückbar ausgebildet. Durch Drücken des Stößels lässt sich der Durchfluss durch das Ventil einstellen. Üblicherweise ist der Durchfluss durch das Ventil umso geringer, je tiefer der Stößel in den Ventilkörper hereingedrückt wird. Der Ventilkörper kann eine Feder aufweisen, welche den Stößel in seine nicht hereingedrückte Ausgangsposition zurückbringt, wenn der Stößel nicht von außen gedrückt wird.

Der Thermostatkopf ist am Ventilkörper angeordnet und dafür ausgebildet, den Stößel zu drücken. Der Thermostatkopf ist dafür ausgebildet, den Stößel in Abhängigkeit von der Außentemperatur so tief hineinzudrücken, dass die Außentemperatur den Sollwert annimmt. Unter einen Thermostatregelventil kann insbesondere auch der Thermostatkopf verstanden werden. Vorteilhaft ist der Thermostatkopf ein elektronischer Thermostatkopf. Der elektrische Thermostatkopf weist einen Temperatursensor, eine Regeleinheit und einen elektrisch betriebenen Aktor - insbesondere Elektromotor - auf. Der Aktor ist zum Drücken des Stößels eingerichtet.

Die Regeleinheit ist dazu eingerichtet eine vom Temperatursensor erfasste Temperatur zu empfangen und zu verarbeiten, insbesondere zu speichern. Die Regeleinheit ist dazu eingerichtet, in Abhängigkeit von empfangenen Temperaturwert und einer in der Regeleinheit gespeicherten Solltemperatur einen Steuerbefehl an den Aktor zu senden, so dass der Stößel bewegt und der Durchfluss durch das Ventil angepasst wird, falls notwendig. Üblicherweise weist die Regeleinheit eine Recheneinheit und einen Datenspeicher auf. Die Regeleinheit kann auch eine Kommunikationseinheit und Senden und/oder Empfangen von Daten aufweisen. Auf diese Weise kann beispielsweise die Regeleinheit die durch den Temperatursensor erfasste Temperatur an ein Heizsystem senden. Die Regeleinheit kann über die Kommunikationseinheit eine gewünschte Solltemperatur empfangen.

Vorteilhaft wird der Thermostatkopf mit einer Batterie und/oder einem Akku mit elektrischer Energie versorgt. In vorteilhaften Ausführungen ist der Thermostatkopf vom Ventilkörper lösbar und wieder befestigbar ausgebildet. Auf diese Weise ist insbesondere ein einfaches Auswechseln des Thermostatkopfs möglich.

Im normalen Regelbetrieb wird der Stößel axial so verschoben, dass der Durchfluss durch das Ventil so eingestellt ist, dass die voreingestellte Solltemperatur erreicht wird. Das Verstellen des Stößels bzw. das axiale Verschieben des Stößels wird auch als eine "Hubfahrt" des Stößels bezeichnet. Die Wegstrecke, um die der Stößel bei einer Hubfahrt bewegt wird, heißt "Hubweg". Der Hubweg kann eine relative Angabe sein - beispielsweise "Hereindrücken um 2.5 mm" - oder eine absolute Angabe sein - beispielsweise "Veränderung der Stößelposition von 1.4 mm auf 3.6 mm", wobei die Längenangabe der Abstand des Stößels von der maximal hineingedrückten Position ist.

Der "Öffnungszustandsverlauf" beschreibt insbesondere die Position des Stößels in Abhängigkeit von der Zeit. Beispielsweise kann der Öffnungszustandsverlauf als eine Tabelle gespeichert sein, in welcher ein Zeitpunkt und der Hubweg von jeder Hubfahrt hinterlegt sind. Bei der "Ventilfahrt" wird der Stößel zum Verkalkungsschutz des Thermostatregelventils bewegt. Die Ventilfahrt dient nicht der Regelung der Temperatur.

Durch die in den Unteransprüchen aufgeführten Merkmale sind vorteilhafte Weiterbildungen des erfindungsgemäßen Verfahrens möglich.

Vorteilhaft wird an vorgegebenen Testzeitpunkten - bevorzugt an regelmäßig angeordneten Testzeitpunkten - der zeitliche Öffnungszustandsverlaufs des Stößels überprüft und, falls notwendig, die Ventilfahrt durchgeführt. Auf diese Weise kann das Thermostatregelventil besonders zuverlässig betrieben werden. Bevorzugt wird beim Prüfen des zeitlichen Öffnungszustandsverlaufs eine oder mehrere Bedingungen überprüft, ob eine zeitnahe Ventilfahrt notwendig ist. Beispielsweise kann als Bedingung überprüft werden, ob der Stößel im Regelbetrieb des Thermostatregelventils in einem vorgegebenen Zeitraum bewegt wurde oder wie oft der Stößel bewegt wurde. Es kann auch überprüft werden, ob der Stößel in einem vorgegebenen Zeitraum über einen ausreichend großen Hubweg bewegt wurde. Eine Ventilfahrt kann notwendig sein, wenn der Stößel im vorgegebenen Zeitraum nicht oder nicht oft genug und/oder mit einem zu geringen Hubweg bewegt wurde. Wird nach der Prüfung des zeitlichen Öffnungszustandsverlaufs ermittelt, dass eine Ventilfahrt notwendig ist, kann die Ventilfahrt danach oder zeitnah danach durchgeführt werden. Es ist auch denkbar, dass die Ventilfahrt beim nächsten möglichen Zeitpunkt durchgeführt wird. Beispielsweise kann eine Ventilfahrt auf die nächste Mittagszeit verschoben werden. Auf diese Weise werden Bewohner nicht durch eine Ventilfahrt in der Nacht gestört.

Die Testzeitpunkte können beliebig gewählt werden. Es ist denkbar, dass die Testzeitpunkte durch den Benutzer vorgebbar sind. Bevorzugt sind die Testzeitpunkte regelmäßig bzw. periodisch angeordnet. Beispielsweise können die Testzeitpunkte jeweils einen zeitlichen Abstand von einer Woche oder zwei Wochen zueinander haben. Die Wahl des zeitlichen Abstandes hängt insbesondere von den technischen Anforderungen an das Thermostatregelventil und äußeren Bedingungen ab, beispielsweise von einer Wasserhärte des Heizwassers oder vom Heizbedarf.

Das Verfahren wird weiter verbessert, wenn bei einem zweiten Testzeitpunkt der zeitliche Öffnungszustandsverlauf zwischen einem ersten Testzeitpunkt und dem zweiten Testzeitpunkt überprüft wird, wobei der zweite Testzeitpunkt zeitlich nach dem ersten Testzeitpunkt angeordnet ist. Auf diese Weise werden nur die relevanten Bewegungen des Stößels seit dem ersten Testzeitpunkt berücksichtigt. Vorteilhaft ist der zweite Testzeitpunkt der nächste Testzeitpunkt, der nach dem zweiten Testzeitpunkt folgt.

Wird die Ventilfahrt über den gesamten Hubweg des Stößels durchgeführt oder wenigstens über weitgehend den gesamten Hubweg des Stößels durchgeführt, hat das den Vorteil, dass das Thermostatregelventil besonders zuverlässig vor einer Verkalkung geschützt wird. Unter "gesamter Hubweg" soll insbesondere der gesamte mögliche Hubweg des Stößels verstanden werden. Unter "weitgehend den gesamten Hubweg" soll insbesondere ein Hubweg verstanden werden, dessen Länge wenigstens 90 %, bevorzugt wenigstens 95 %, besonders bevorzugt wenigstens 98 % einer Länge des gesamten Hubwegs beträgt.

Das Verfahren wird weiter verbessert, wenn überprüft wird, welcher Teil des Hubwegs des Stößels nicht innerhalb des zeitlichen Öffnungszustandsverlaufs durchfahren wurde und, falls notwendig, die Ventilfahrt über diesen Teil des Hubwegs durchgeführt wird. Auf diese Weise wird ein zuverlässiger Verkalkungsschutz gewährleistet und dabei ein mechanischer Verschleiß des Thermostatregelventils weiter minimiert sowie die Batterielebensdauer weiter erhöht. Der Teil des Hubwegs, der nicht innerhalb des zeitlichen Öffnungszustandsverlaufs durchfahren wurde, beschreibt insbesondere einen Teil des Hubwegs, der nicht innerhalb des betrachteten Zeitraums im Regelbetrieb von Stößel durchfahren wurde. Vorteilhaft wird, falls möglich, bei der Ventilfahrt nur der Teil des Hubwegs durchfahren, der nicht innerhalb des zeitlichen Öffnungszustandsverlaufs durchfahren wurde.

Wird die Ventilfahrt und/oder das Prüfen des Öffnungszustandsverlaufs nach einer vorgegebenen Zeitdifferenz nach einer letzten Hubfahrt des Stößels durchgeführt - wird insbesondere wenigstens der nächste vorgegebene Testzeitpunkt um die vorgegebene Zeitdifferenz verschoben - hat das den Vorteil, dass eine Häufigkeit der unnötigen Ventilfahrten weiter gesenkt wird. Unter Verschieben ist insbesondere ein Verschieben in die Zukunft gemeint. In vorteilhaften Varianten kann die Zeitdifferenz den gleichen Wert haben wie der zeitliche Abstand zum nächsten Testzeitpunkt. Auf diese Weise wird die Ventilfahrt auf den nächsten Testzeitpunkt verschoben. Es ist auch denkbar, dass alle folgenden Testzeitpunkte um die Zeitdifferenz verschoben werden.

Es ist möglich, dass das Verschieben der Ventilfahrt und/oder des Prüfens des Öffnungszustandsverlaufs um die Zeitdifferenz nach der letzten Hubfahrt beim Prüfen des Öffnungszustandsverlaufs durchgeführt wird. Dabei wird die letzte Hubfahrt des Stößels im betrachteten Zeitraum des Öffnungszustandsverlaufs verwendet. Es ist auch möglich, dass die Bewegungen des Stößels kontinuierlich oder weitgehend kontinuierlich betrachtet bzw. überprüft werden und das Verschieben der Ventilfahrt und/oder des Prüfens des Öffnungszustandsverlaufs um die Zeitdifferenz nach der letzten Hubfahrt sofort oder weitgehend sofort nach dem Feststellen der Hubfahrt durchgeführt wird.

Das Verfahren wird verbessert, wenn die Ventilfahrt und/oder das Prüfen des Öffnungszustandsverlaufs um die vorgegebene Zeitdifferenz zeitlich verschoben wird, wenn die letzte Hubfahrt des Stößels im Regelbetrieb des Thermostatregelventils einen vorgegebenen Mindesthub überschreitet. Auf diese Weise wird sichergestellt, dass die letzte Hubfahrt relevant bzw. wirksam für den Verkalkungsschutz des Thermostatregelventils ist. Insbesondere kann wenigstens der nächste vorgegebene Testzeitpunkt um eine vorgegebene Zeitdifferenz verschoben werden, wenn die letzte Hubfahrt des Stößels im Regelbetrieb des Thermostatregelventils einen vorgegebenen Mindesthub überschreitet.

Es ist möglich, dass das Verschieben der Ventilfahrt und/oder des Prüfens des Öffnungszustandsverlaufs um die Zeitdifferenz nach der letzten Hubfahrt beim Prüfen des Öffnungszustandsverlaufs durchgeführt wird. Dabei wird geprüft, ob die letzte Hubfahrt des Stößels im betrachteten Zeitraum des Öffnungszustandsverlaufs den vorgegebenen Mindesthub überschreitet. Es ist auch möglich, dass die Bewegungen des Stößels kontinuierlich oder weitgehend kontinuierlich betrachtet bzw. überprüft werden und das Verschieben der Ventilfahrt und/oder des Prüfens des Öffnungszustandsverlaufs um die Zeitdifferenz nach der letzten Hubfahrt sofort oder weitgehend sofort nach dem Feststellen der Hubfahrt durchgeführt wird, falls der Mindesthub überschritten wird.

In besonderen Ausführungen ist es denkbar, dass mehrere Mindesthubwerte vorgegeben sind und jedem Mindesthubwert eine Zeitdifferenz zugeordnet ist. Beispielsweise kann einem größeren Mindesthubwert eine größere Zeitdifferenz zugeordnet werden. In besonders vorteilhaften Varianten wird dem Hubweg der letzten Hubfahrt über eine Zuordnungsfunktion die Zeitdifferenz zugeordnet. Vorteilhaft ist Zuordnungsfunktion monoton steigend, so dass einem größeren Hubweg eine größere Zeitdifferenz zugeordnet wird.

Ein weiterer Aspekt der vorliegenden Erfindung ist ein Computerprogramm, welches dazu eingerichtet ist, eine Ausführungsform des Verfahrens gemäß der vorliegenden Erfindung auszuführen. Insbesondere veranlasst das Computerprogramm ein Thermostatregelventil mit einer Regeleinheit, eine Ausführungsform des Verfahrens gemäß der vorliegenden Erfindung durchzuführen, wenn es auf dem Thermostatregelventil ausgeführt wird.

Ein weiterer Aspekt der vorliegenden Erfindung ist ein maschinenlesbares Speichermedium. Auf dem maschinenlesbaren Speichermedium ist das Computerprogramm gemäß der vorliegenden Erfindung gespeichert.

Eine weitere vorteilhafte Ausführungsform der Erfindung manifestiert sich in einem Thermostatregelventil - insbesondere einem Thermostatkopf - mit einer Regeleinheit, das durch eine entsprechende integrierte Schaltung und/oder ein auf einem Speicher gespeichertes Computerprogramm gemäß der vorliegenden Erfindung dazu eingerichtet ist, ein Verfahren gemäß der vorliegenden Erfindung auszuführen.

Ein weiterer Aspekt der Erfindung ist ein Heizsystem und/oder ein Systems zur Hausautomation - beispielsweise ein Smart Home System - mit einer Steuereinheit - beispielsweise eine Raumbedieneinheit - und wenigstens einem Thermostatregelventil, wobei das Heizsystem und/oder ein Systems zur Hausautomation durch eine entsprechende integrierte Schaltung und/oder ein auf einem Speicher gespeichertes Computerprogramm gemäß der vorliegenden Erfindung dazu eingerichtet ist, ein Verfahren gemäß der vorliegenden Erfindung auszuführen.

Unter "Heizsystem" ist insbesondere ein System aus mindestens einem Gerät zur Erzeugung von Wärmeenergie und/oder zum Empfangen von Wärmeenergie zu verstehen, insbesondere ein Heizgerät bzw. Heizbrenner, beispielsweise ein Brennwertkessel, insbesondere zur Verwendung in einer Gebäudeheizung und/oder zur Warmwassererzeugung, bevorzugt durch das Verbrennen von einem gasförmigen oder flüssigen Brennstoff oder durch elektrisches Heizen. Ein Heizsystem kann auch aus mehreren solchen Geräten zur Erzeugung von Wärmeenergie sowie weiteren, den Heizbetrieb unterstützenden Vorrichtungen, wie etwa einem Wasser- oder Brennstoffspeicher oder einer Wasser- oder Brennstoffpumpe oder einem Ausdehnungsgefäß, bestehen.

Unter "System zur Hausautomation" oder "Smart Home System" ist insbesondere ein System zur automatischen oder wenigstens teilautomatischen Durchführung und/oder Steuerung und/oder Regelung von Funktionsabläufen in einem Gebäude zu verstehen, insbesondere von Wohnhäusern, insbesondere nach vorgegebenen Einstellparametern. Insbesondere umfasst ein System zur Hausautomation die Steuerung und/oder Regelung von Funktionsabläufen der Gebäudesicherheit bzw. Gebäudeüberwachung und/oder des Energiemanagements und/oder der Gebäudeheizung und/oder der Warmwasserversorgung und/oder der Beleuchtung und/oder von Haushaltsgeräten und/oder von Unterhaltungselektronik. Ein System zur Hausautomation kann beispielsweise ein Heizsystem und/oder ein Beleuchtungssystem umfassen. Insbesondere sind die Vorrichtungen eines Systems zur Hausautomation, beispielsweise Sensoren, Aktoren, Bedienelemente, Verbraucher und sonstige technische Einheiten, miteinander vernetzt. Ein System zur Hausautomation ist oft zur Kommunikation bzw. zum Datenaustausch mit einem entfernten, bevorzugt mobilen Rechengerät eingerichtet, beispielsweise über das Internet, insbesondere durch eine Cloud. Auf diese Weise können Funktionsabläufe im Gebäude ferngesteuert werden, beispielsweise eine gewünschte Raumtemperatur eingestellt werden. Es kann auch möglich sein, Informationen aus dem Gebäude zu empfangen, beispielsweise eine Aufnahme einer Überwachungskamera oder eine gemessene Raumtemperatur. Mit "Smart Home System" ist manchmal ein System zur Hausautomation gemeint, bei dem eine intelligente Steuerung im Vordergrund steht, beispielsweise durch selbstlernende Algorithmen.

Unter einer "Steuereinheit" soll insbesondere eine Vorrichtung mit einer Regeleinheit und/oder einer Recheneinheit verstanden werden, welche dazu eingerichtet ist, das wenigstens eine Thermostatregelventil vollständig oder zumindest teilweise zu steuern und/oder zu regeln. Das wenigstens eine Thermostatregelventil ist dazu eingerichtet, Daten von der Steuereinheit empfangen, vorteilhaft über eine Funkverbindung, beispielsweise über WLAN oder ZigBee oder Z-Wave oder Bluetooth. Insbesondere ist es möglich, dass die Steuereinheit eine aktuell gewünschte Solltemperatur an das wenigstens eine Thermostatregelventil übermittelt. Es ist auch denkbar, dass die Steuereinheit Steuerbefehle an den Aktor des wenigstens einen Thermostatregelventils übermittelt. Es ist insbesondere denkbar, dass die Steuereinheit den zeitlichen Öffnungszustandsverlauf des Stößels vom wenigstens einen Thermostatregelventil empfängt. Es ist möglich, dass die Steuereinheit den zeitlichen Öffnungszustandsverlauf überprüft und auf dieser Grundlage eine Anforderung einer Ventilfahrt zum Verkalkungsschutz an das wenigstens eine Thermostatregelventil sendet.

Die Steuereinheit kann die Raumbedieneinheit des Heizsystems oder des Systems zur Hausautomation sein. Es ist auch möglich, dass die Steuereinheit teilweise oder vollständig in der Form von einem Computerprogramm vorliegt, welches beispielsweise auf einem Smartphone oder Tabletcomputer oder einem Server oder einer Cloud durchgeführt wird. Es ist möglich, dass die Steuereinheit über das Internet und/oder eine Mobilfunkverbindung mittelbar mit dem wenigstens einem Thermostatregelventil verbunden ist bzw. mit diesem kommuniziert.

### Zeichnungen

In den Zeichnungen sind Ausführungsbeispiele des Verfahrens zum Ansteuern eines Thermostatregelventils gemäß der vorliegenden Erfindung sowie ein Thermostatregelventil und ein System zur Hausautomation gemäß der vorliegenden Erfindung dargestellt und in der nachfolgenden Beschreibung näher erläutert. Es zeigen
Figur 1 eine schematische Darstellung eines Thermostatregelventils gemäß der vorliegenden Erfindung,
Figur 2 das Verfahren gemäß der vorliegenden Erfindung und
Figur 3 ein Smart Home System mit mehreren Thermostatregelventilen gemäß der vorliegenden Erfindung.

### Beschreibung

In den verschiedenen Ausführungsvarianten erhalten gleiche Teile die gleichen Bezugszahlen.

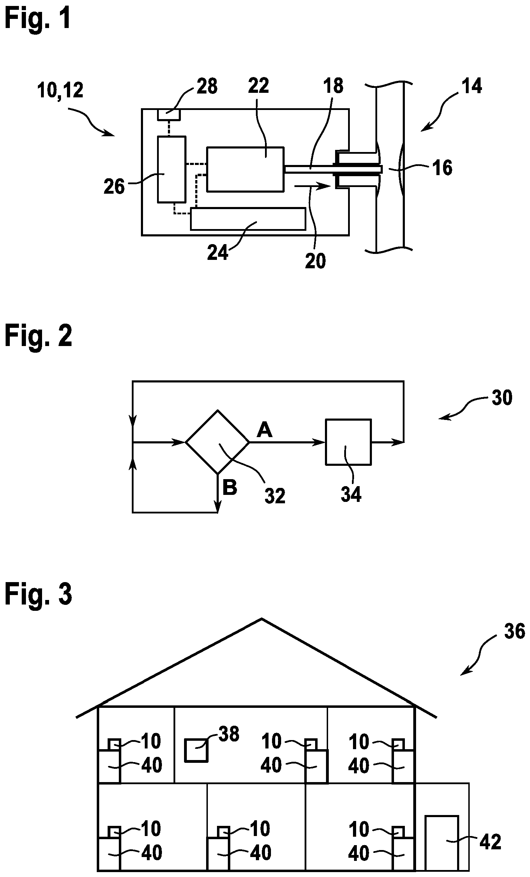

Figur 1 zeigt ein Thermostatregelventil 10. Das Thermostatregelventil 10 ist im Ausführungsbeispiel als Thermostatkopf 12 ausgebildet. Das Thermostatregelventil 10 ist an einem Gewinde eines Ventilkörpers 14 angeschraubt. Der Ventilkörper 14 weist ein Ventil 16 und einen Stößel 18 auf. Der Stößel 18 ist in einer axialen Richtung 20 beweglich und verändert je nach Position einen Durchfluss von Heizwasser durch das Ventil 16. Der Stößel 18 wird durch eine nicht abgebildete, im Ventilkörper 14 angeordnete Feder aus dem Ventilkörper 14 herausgedrückt. In einer maximal aus dem Ventilkörper 14 herausgedrückten Position (wie in Figur 1 abgebildet), ist der Durchfluss von Heizwasser durch das Ventil 16 maximal. Ist der Stößel 18 vollständig hereingedrückt, kann kein Heizwasser durch das Ventil 16 fließen.

Das Thermostatregelventil 12 weist einen Elektroantrieb 22, eine Batterie 24, eine Regeleinheit 26 sowie einen Temperatursensor 28 auf. Der Elektroantrieb 22 ist dazu ausgebildet, den Stößel 18 in den Ventilkörper 14 hereinzudrücken. Der Elektroantrieb 22 weist einen Elektromotor und ein Getriebe auf. Das Getriebe wandelt eine Rotationsbewegung des Elektromotors in eine lineare Bewegung um. Die Regeleinheit 26 erfasst über eine Positionsrückmeldung des Elektroantriebs 22 eine Position des Stößels 18. Die Position des Stößels 18 wird mit einer Prozentangabe beschrieben. Ein vollständig in den Ventilkörper 14 hereingedrückter Stößel 18 hat eine Position von 100 %. Ein vollständig aus dem Ventilkörper 14 herausgedrückter bzw. entspannter Stößel 18 hat eine Position von 0 %.

Die Regeleinheit 26 speichert einen zeitlichen Öffnungszustandsverlauf des Stößels 18. Der zeitliche Öffnungszustandsverlauf wird durch zusammen mit jeweiligen Zeitpunkten gespeicherte Positionen des Stößels 18 gebildet. Sobald die Position des Stößels 18 geändert wird, wird die neue Position zusammen mit dem Zeitpunkt durch die Regeleinheit 26 im Öffnungszustandsverlauf gespeichert.

Figur 2 zeigt ein Verfahren 30 zum Ansteuern des Thermostatregelventils 10. In einem ersten Schritt 32 wird der zeitliche Öffnungszustandsverlauf des Stößels 18 überprüft. Schritt 32 wird durchgeführt, sobald ein Testzeitpunkt erreicht wird. Die Testzeitpunkte sind in der Regeleinheit 26 gespeichert. Im Ausführungsbeispiel sind die Testzeitpunkte regelmäßig angeordnet. Schritt 32 wird einmal die Woche durchgeführt. Die Testzeitpunkte liegen im Ausführungsbeispiel am Samstag, um 11:00 Uhr. Der Wochentag und die Uhrzeit können vorgegeben werden und sind durch einen Benutzer einstellbar.

Im gespeicherten Öffnungszustandsverlauf sind die Positionen des Stößels zwischen dem aktuellen Testzeitpunkt und dem vorhergehenden Testzeitpunkt. In Schritt 32 wird durch die Regeleinheit 26 geprüft, welcher Hubweg zwischen dem vorhergehenden Testzeitpunkt und dem aktuellen Testzeitpunkt vom Stößel 18 durchfahren wurde. Die Regeleinheit 26 ermittelt aus dem Öffnungszustandsverlauf einen niedrigsten Wert der Position des Stößels 18 und einen größten Wert der Position des Stößels 18 zwischen dem vorhergehenden Testzeitpunkt und dem aktuellen Testzeitpunkt. Der durch den Stößel 18 durchfahrene Hubweg wird als die positive Differenz zwischen dem niedrigsten Wert der Position des Stößels 18 und dem größten Wert der Position des Stößels 18.

Ist der durch den Stößel 18 durchfahrene Hubweg kleiner als 90 %, wird das Verfahren 30 mit Schritt 34 fortgesetzt (Pfad A in Figur 2). In Schritt 34 wird eine Ventilfahrt des Stößels 18 zum Verkalkungsschutz durchgeführt. Der Stößel 18 wird dabei im Ausführungsbeispiel über den gesamten Hubweg des Stößels 18 durchfahren. Der Stößel 18 wird von der Position 0 % auf die Position 100 % gefahren. Anschließend wird der Stößel zurück auf die Position 0 % gefahren.

Das Verfahren 30 wird anschließend mit Schritt 32 fortgesetzt, sobald ein der nächste Testzeitpunkt erreicht wird.

Wird in Schritt 32 ermittelt, dass der durch den Stößel 18 durchfahrene Hubweg größer als 90 % ist, wird das Verfahren 30 auf dem Pfad B fortgesetzt. Schritt 32 wird widerholt, sobald der nächste Testzeitpunkt erreicht wird.

Figur 3 zeigt ein Smart Home System 36 mit einer Steuereinheit 38, einer Heizanlage 42 sowie sechs Heizkörpern 40 mit jeweils einem Thermostatregelventil 10. Die Steuereinheit 38 ist eine Raumbedieneinheit des Smart Home Systems 36. Die Heizanlage 42 versorgt die Heizkörper 40 mit Heizwasser. Die Steuereinheit 38 ist dazu ausgebildet, Benutzereingaben aufzunehmen und zu verarbeiten. Die Steuereinheit 38 erfasst insbesondere eine gewünschte Solltemperatur für jeden Raum. Die Thermostatregelventile 10 sind für eine Kommunikation über ZigBee mit der Steuereinheit 38 ausgebildet. Die Steuereinheit übermittelt eine gewünschte Solltemperatur an die jeweiligen Thermostatregelventile 10. Die Thermostatregelventile 10 regeln die Umgebungstemperatur auf die durch die Steuereinheit 38 übermittelte Solltemperatur. Die Thermostatregelventile 10 übermitteln die Position ihres Stößels 18 an die Steuereinheit 38. Auf der Steuereinheit 38 sind die jeweiligen zeitlichen Öffnungszustandsverläufe für jedes Thermostatregelventil 10 gespeichert. Die Steuereinheit 38 prüft die Öffnungszustandsverläufe. Falls notwendig, sendet die Steuereinheit 38 einen Steuerbefehl an ein Thermostateregelventil 10, welcher das Thermostatregelventil 10 dazu veranlasst, eine Ventilfahrt des Stößels durchzuführen.

## Patentansprüche

1. Verfahren (30) zum Ansteuern eines Thermostatregelventils (10), **dadurch gekennzeichnet, dass** eine Ventilfahrt eines Stößels (18) zum Verkalkungsschutz in Abhängigkeit von einem zeitlichen Öffnungszustandsverlaufs des Stößels (18) durchgeführt wird, wenn der durch den Stößel (18) in einem vorgegebenen Zeitraum durchfahrene Hubweg kleiner als 90% ist, wobei bei der Ventilfahrt der Stößel (18) zum Verkalkungsschutz des Thermostatregelventils (10) bewegt wird.

2. Verfahren (30) nach Anspruch 1, **dadurch gekennzeichnet, dass** an vorgegebenen Testzeitpunkten - bevorzugt an regelmäßig angeordneten Testzeitpunkten - der zeitliche Öffnungszustandsverlaufs des Stößels (18) überprüft wird, wobei überprüft wird, ob der durch den Stößel (18) in einem vorgegebenen Zeitraum durchfahrene Hubweg größer als 90% ist, und die Ventilfahrt durchgeführt wird, wenn der durch den Stößel (18) im vorgegebenen Zeitraum durchfahrene Hubweg kleiner als 90% ist.

3. Verfahren (30) nach Anspruch 2, **dadurch gekennzeichnet, dass** bei einem zweiten Testzeitpunkt der zeitliche Öffnungszustandsverlauf zwischen einem ersten Testzeitpunkt und dem zweiten Testzeitpunkt überprüft wird, wobei der zweite Testzeitpunkt zeitlich nach dem ersten Testzeitpunkt angeordnet ist.

4. Verfahren (30) nach einem der vorhergehenden Ansprüche, **dadurch gekennzeichnet, dass** die Ventilfahrt über einen gesamten Hubweg des Stößels (18) durchgeführt wird oder wenigstens über weitgehend den gesamten Hubweg des Stößels (18) durchgeführt wird.

5. Verfahren (30) nach einem der vorhergehenden Ansprüche, **dadurch gekennzeichnet, dass** überprüft wird, welcher Teil des Hubwegs des Stößels (18) nicht innerhalb des zeitlichen Öffnungszustandsverlaufs durchfahren wurde und die Ventilfahrt über diesen Teil des Hubwegs durchgeführt wird, wenn der Stößel (18) im vorgegebenen Zeitraum mit einem Hubweg kleiner als 90% bewegt wurde.

6. Verfahren (30) nach einem der vorhergehenden Ansprüche, **dadurch gekennzeichnet, dass** die Ventilfahrt und/oder das Prüfen des Öffnungszustandsverlaufs nach einer vorgegebenen Zeitdifferenz nach einer letzten Hubfahrt des Stößels (18) durchgeführt wird - insbesondere dass wenigstens der nächste vorgegebene Testzeitpunkt um die vorgegebene Zeitdifferenz verschoben wird.

7. Verfahren (30) nach einem der vorhergehenden Ansprüche, **dadurch gekennzeichnet, dass** die Ventilfahrt und/oder das Prüfen des Öffnungszustandsverlaufs um eine vorgegebene Zeitdifferenz zeitlich verschoben wird, wenn die letzte Hubfahrt des Stößels (18) einen vorgegebenen Mindesthub überschreitet.

8. Thermostatregelventil (10) - insbesondere ein Thermostatkopf (12) - mit einer Regeleinheit (26) mit einer integrierten Schaltung welche dazu eingerichtet ist ein Verfahren nach einem der Ansprüche 1-7 auszuführen.

9. Computerprogramm, welches dazu eingerichtet ist, alle Schritte eines Verfahrens (30) nach einem der Ansprüche 1-7 auszuführen, wenn es auf einer Regeleinheit (26) eines Thermostatregelventils nach Anspruch 8 ausgeführt wird.

10. Maschinenlesbares Speichermedium, auf dem das Computerprogramm nach Anspruch 9 gespeichert ist.

11. Heizsystem und/oder ein Systems zur Hausautomation - beispielsweise ein Smart Home System (36) - mit einer Steuereinheit (38) - beispielsweise eine Raumbedieneinheit - und wenigstens einem Thermostatregelventil (10), wobei das Heizsystem und/oder ein Systems zur Hausautomation mit einer integrierten Schaltung welche dazu eingerichtet ist ein Verfahren nach einem der Ansprüche 1-7 auszuführen und/oder mit einem auf einem Speicher der Steuereinheit (38) gespeichertem Computerprogramm nach Anspruch 9.

## Claims

1. Method (30) for actuating a thermostatic control valve (10), **characterized in that** the valve travel of a plunger (18) for protecting against calcification is executed as a function of a chronological opening state profile of the plunger (18) when the travel distance travelled by the plunger (18) is less than 90% in a prescribed time period, wherein during the valve travel the plunger (18) is moved in order to protect the thermostatic control valve (10) against calcification.

2. Method (30) according to Claim 1, **characterized in that** the chronological opening state profile of the plunger (18) is checked at predefined test time periods - preferably at regularly arranged test time periods - wherein it is checked whether the travel distance travelled by the plunger (18) is greater than 90% in a prescribed time period, and the valve travel is executed when the travel distance travelled by the plunger (18) is less than 90% in the predefined time period.

3. Method (30) according to Claim 2, **characterized in that** at a second testing time the chronological opening state profile between a first testing time and the second testing time is checked, wherein the second testing time is arranged chronologically after the first testing time.

4. Method (30) according to one of the preceding claims, **characterized in that** the valve travel is carried out over an entire travel distance of the plunger (18) or is carried out at least over largely the entire travel distance of the plunger (18).

5. Method (30) according to one of the preceding claims, **characterized in that** it is checked which part of the travel distance of the plunger (18) has not been passed through within the chronological opening state profile, and the valve travel is carried out over this part of the travel distance when the plunger (18) has been moved with a travel distance of less than 90% in the prescribed time period.

6. Method (30) according to one of the preceding claims, **characterized in that** the valve travel and/or the testing of the opening state profile is carried out after a prescribed time difference after a last travel movement of the plunger (18) - in particular **in that** the next prescribed testing time is shifted by the predefined time difference.

7. Method (30) according to one of the preceding claims, **characterized in that** the valve travel and/or the testing of the opening state profile is shifted chronologically by a prescribed time difference if the last travel movement of the plunger (18) exceeds a prescribed minimum travel distance.

8. Thermostatic control valve (10) - in particular a thermostatic head (12) - with a control unit (26) with an integrated circuit which is configured to execute a method according to one of Claims 1-7.

9. Computer program which is configured to carry out all the steps of a method (30) according to one of Claims 1-7 when it is executed on a control unit (26) of a thermostatic control valve according to Claim 8.

10. Computer-readable storage medium in which the computer program according to Claim 9 is stored.

11. Heating system and/or a system for automating a house - for example a smart home system (36) - with a control unit (38) - for example a room control unit - and at least one thermostatic control valve (10), wherein the heating system and/or a system for automating a house with an integrated circuit which is configured to execute a method according to one of Claims 1-7 and/or with a computer program, stored in a memory of the control unit (38), according to Claim 9.

## Revendications

1. Procédé (30) de commande d'une soupape de régulation thermostatique (10), **caractérisé en ce que**, pour réaliser une protection contre l'entartrage, une excursion de soupape d'un poussoir (18) est effectuée en fonction de la variation dans le temps de l'état d'ouverture du poussoir (18) lorsque la course de levage, effectuée par le poussoir (18) dans un intervalle de temps spécifié, est inférieure à 90 %, le poussoir (18) étant déplacé pendant l'excursion de soupape pour protéger la soupape de régulation thermostatique (10) contre l'entartrage.

2. Procédé (30) selon la revendication 1, **caractérisé en ce que** la variation dans le temps de l'état d'ouverture du poussoir (18) est vérifiée à des instants de test spécifiés, de préférence à des instants de test réguliers, une vérification étant effectuée pour savoir si la course de levage, effectuée par le poussoir (18) pendant un intervalle de temps spécifié, est supérieure à 90 %, et l'excursion de soupape étant effectuée lorsque la course de levage, effectuée par le poussoir (18) pendant l'intervalle de temps spécifié, est inférieure à 90 %.

3. Procédé (30) selon la revendication 2, **caractérisé en ce qu'**à un deuxième instant de test, une vérification de la variation dans le temps de l'état d'ouverture est effectuée entre un premier instant de test et le deuxième instant de test, le deuxième instant de test étant situé temporellement après le premier temps de test.

4. Procédé (30) selon l'une des revendications précédentes, **caractérisé en ce que** l'excursion de soupape est effectuée sur toute une course de levage du poussoir (18) ou au moins est effectuée sur une grande partie de la course de levage totale du poussoir (18).

5. Procédé (30) selon l'une des revendications précédentes, **caractérisé en ce qu'**une vérification est effectuée pour savoir quelle partie de la course de levage du poussoir (18) n'a pas été parcourue pendant la variation dans le temps de l'état d'ouverture et si l'excursion de soupape est effectuée sur cette partie de la course de levage lorsque le poussoir (18) a été déplacé d'une course de levage inférieure à 90 % pendant l'intervalle de temps spécifié.

6. Procédé (30) selon l'une des revendications précédentes, **caractérisé en ce que** l'excursion de soupape et/ou la vérification de la variation de l'état d'ouverture est effectuée après une différence temporelle spécifiée après une dernière excursion de levage du poussoir (18), en particulier **en ce qu'**au moins l'instant de test spécifié suivant est décalé de la différence temporelle spécifiée.

7. Procédé (30) selon l'une des revendications précédentes, **caractérisé en ce que** l'excursion de soupape et/ou la vérification de la variation d'état d'ouverture est décalée dans le temps d'une différence temporelle spécifiée si la dernière excursion de levage du poussoir (18) dépasse une course minimale spécifiée.

8. Soupape de régulation thermostatique (10), en particulier une tête de thermostat (12), comprenant une unité de régulation (26) pourvue d'un circuit intégré qui est conçu pour mettre en œuvre un procédé selon l'une des revendications 1 à 7.

9. Logiciel qui est conçu pour réaliser toutes les étapes d'un procédé (30) selon l'une des revendications 1 à 7 lorsqu'il est exécuté sur une unité de régulation (26) d'une soupape de régulation thermostatique selon la revendication 8.

10. Support de stockage lisible par machine sur lequel est stocké le logiciel selon la revendication 9.

11. Système de chauffage et/ou système domotique, par exemple un système de maison intelligente (36), comprenant une unité de commande (38), par exemple une unité de réglage d'ambiance, et au moins une soupape de régulation thermostatique (10), le système de chauffage et/ou un système domotique comprenant un circuit intégré qui est conçu pour mettre en œuvre un procédé selon l'une des revendications 1 à 7 et/ou un logiciel selon la revendication 9 stocké dans une mémoire de l'unité de commande (38).
